# EUROPÄISCHE PATENTANMELDUNG

(11) **EP 1 645 808 A1**
(43) Veröffentlichungstag der Anmeldung: **12.04.2006**
(21) Anmeldenummer: 05020132.6
(22) Anmeldetag: 15.09.2005
(51) Int. Cl.: F24D 3/14

(54) **Verlegeschiene für Fussbodenheizungsrohre**

(30) Priorität: 16.09.2004 DE 102004045277
(71) Anmelder: Quithell Gmbh, 49324 Melle (DE)
(72) Erfinder: Quittmann, Jürgen, 33803 Steinhagen (DE); Hellmann, Bernhard, 49324 Melle (DE)
(74) Vertreter: Wiebusch, Manfred

(57) **Zusammenfassung**

Verlegeschiene für Fußbodenheizungsrohre, mit an den Querschnitt der Heizungsrohre (18) angepaßten Aussparungen (16), wobei die die Verlegeschlene (10; 10') ein L- oder T-Profil aufweist und wobei ein aufragender Schenkel (14) der Verlegeschiene mit einem waagerecht auf einer Unterlage aufllegenden Basisschenkel (12) einen spitzen Winkel bildet.

## Beschreibung

Die Erfindung betrifft eine Verlegeschiene für Fußbodenheizungsrohre, mit an den Querschnitt der Heizungsrohre angepaßten Aussparungen, wobei die die Verlegeschiene ein L- oder T-Profil aufweist.

Bei Fußbodenheizungen werden die Heizungsrohre zumeist schlangenförmig über einer Wärmedämmschicht verlegt und anschließend in eine Schicht aus Estrich oder dergleichen eingebettet. Eine bekannte Verlegetechnik besteht darin, daß auf der Wärmedämmschicht bzw. auf einer diese abdeckenden Folie Verlegeschienen befestigt werden, die ein U-förmiges Profil aufweisen und in beiden aufragenden Schenkeln mit den Aussparungen für die Heizungsrohre versehen sind. Die rechtwinklig zu der Verlegeschiene verlaufenden Heizungsrohre können dann von oben in die Aussparungen eingerastet oder eingedrückt werden. Da die Verrastung gleichzeitig in beiden Schenkeln des U-Profils erfolgt, wird eine gleichmäßige, Kräfteverteilung erreicht und ein Kippen der Verlegeschiene verhindert. Die Heizungsrohre sind dann klemmend in den Aussparungen gehalten. In einigen Fällen weisen die aus Kunststoff hergestellten Verlegeschienen in ihren aufragenden Schenkeln vertikale Schlitze auf, durch die zusammen mit den Aussparungen federnde Zungen zur Klemmhalterung der Heizungsrohre begrenzt werden. Nachdem die Heizungsrohre in dieser Welse fixiert worden sind, werden sie zusammen mit den Verlegeschienen in eine Schicht aus Estrich eingebettet.

Da die relativ spröde Estrichschicht über einer verhältnismäßig weichen Wärmedämmschicht liegt, kann es infolge von Wärmedehnung und/oder mechanischen Belastungen leicht zu Rissen in der Estrichschicht kommen. Solche Risse bilden sich bevorzugt oberhalb der Verlegeschienen.

Aus DE 77 10 940 U und DE 33 09 559 A1 sind Verlegeschienen mit einem T-Profil bekannt. In einem senkrecht zur Bodenauflagefläche aufragenden Schenkel sind maulförmige Aufnahmeöffnungen zum Einrasten von Heizungsrohren vorgesehen. Ein Ausrasten durch unabsichtliches Hochziehen der Heizungsrohre ist jedoch in gleicher Weise möglich. Dies erschwert das Verlegen der Heizungsrohre.

Aufgabe der Erfindung ist es, die Entstehung der beschreibenen Risse in der Estrichschicht zu vermeiden und das Verlegen der Heizungsrohre zu erleichtern.

Diese Aufgabe wird erfindungsgemäß durch eine Verlegeschiene der eingangs genannten Art gelöst, bei der ein aufragender Schenkel der Verlegeschiene mit einem waagerecht auf einer Unterlage aufliegenden Basisschenkel einen spitzen Winkel bildet.

Bei den herkömmlichen Verlegeschienen mit U-profil erhält man zwischen den beiden aufragenden Schenkeln der Schiene einen Estrichkörper, der nur durch verhältnismäßig dünne Brücken mit der Estrichschicht außerhalb der Verlegeschiene verbunden ist. Wenn in der Estrichschicht Spannungen aufgrund von Wärmedehnung, Trittbelastung oder sonstiger mechanischer Belastung auftreten, stellt der Estrichkörper in der Verlegeschiene eine Barriere dar, die die Ausbreitung und Verteilung dieser Spannungen behindert. Die Folge ist, daß sich die Spannungen über den aufragenden Schenkeln der Verlegeschienen konzentrieren. Die Rißbildung nimmt an diesen Spannungskonzentrationen ihren Ausgang.

Durch das erfindungsgemäße L- oder T-Profil wird die Entstehung eines separaten Estrichkörpers verhindert, da die Verlegeschiene nur einen einzigen aufragenden Schenkel autweist, so daß der Estrich beiderseits dieses Schenkels Bestandteil einer großflächigeren Estrichschicht ist. Im Fall von Spannungen kann der einzige Schenkel auch wesentlich leichter nachgeben als die herkömmliche Anordnung mit zwei Schenkeln und einem dazwischen liegendem Estrichkörper. Durch Änderung der Profilform der Verlegeschiene kann somit die Häufigkeit von Rißbildungen in der Estrichschicht deutlich reduziert werden. Ein L-Profil hat dabei den zusätzlichen Vorteil, daß sich die Verlegeschienen bei der Lagerung und beim Transport raumsparend ineinander schachteln lassen. Ein T-Profil weist den Vorteil einer größeren Kippstabilität auf.

Der aufragende Schenkel des L- oder T-Profils bildet mit dem waagerechten, auf der Unterlage aufliegenden Schenkel einen spitzen Winkel. Auf diese Weise läßt sich auch bei einem L-Profll eine hohe Kippstabilltät erreichen. Außerdem wird durch die Schrägstellung des aufragenden Schenkels das Einrasten der Heizungsrohre erleichtert, da die Flanken der Aussparungen leichter nachgeben können, wenn die Helzungsrohre senkrecht nach unten in die Aussparungen eingedrückt werden. Da die Achse des Heizungsrohres und damit auch die Achse der entsprechenden Aussparung schräg in bezug auf den aufragenden Schenkel verläuft, erhält man außerdem am Grund der Aussparung auch eine größere Auflagefläche für das Heizungsrohr. Da die Heizungsrohre zumeist mit einer als Diffusionssperre dienenden Beschichtung versehen sind, wird durch die größere Auflagefläche die Gefahr einer Beschädigung der Diffusionssperre verringert.

ln den Unteransprüchen sind vorteilhafte Ausgestaltungen und Weiterbildungen der Erfindung angegeben, die das Verlegen der Heizungsrohre erleichtern, eine schonende Fixierung der Heizungsrohre ermöglichen sowie eine rationelle Fertigung und Lagerhaltung von Verlegeschienen für Heizungsrohre mit unterschiedlichen Querschnitten ermöglichen.

Bevorzugt ist der Querschnitt der Aussparung so gewählt, daß die Heizungsrohre mit geringem Spiel in der Aussparung liegen und somit nicht klemmend sondern formschlüssig gehalten sind. Hierdurch wird die Gefahr einer Beschädigung der Diffusionssperre weiter verringert und zugleich die Gefahr einer Rißbildung weiter reduziert, da sich die Heizungsrohre im Fall von Wärmedehnung axial in den Aussparungen verschieben können.

Die leichte Verrastbarkeit der Heizungsrohre in den Ausnehmungen gestattet es auch, Heizungsrohre mit unterschiedlichen Querschnitten in denselben Aussparungen zu verrasten, so daß man im Hinblick auf die unterschiedlichen Querschnitte der Heizungsrohre mit einem kleineren Sortiment von Verlegeschienen auskommt. Da die Abstände zwischen den schlangenförmig verlegten Heizungsrohre und dementsprechend auch die Abstände zwischen den Aussparungen relativ groß sind, ist es auch möglich, zwei oder mehr Sätze von unterschiedlich großen Aussparungen auf Lücke versetzt in derselben Verlegeschiene anzuordnen, so daß sämtliche gängigen Querschnittsmaße mit einer einzigen Verlegeschiene abgedeckt werden können.

In einer besonders bevorzugten Ausführungsform ist ein Heizungsrohr durch Eindrücken von oben in eine der Aussparungen unter elastischem Nachgeben der Rastnasen in die Aussparung einrastbar. Beispielsweise sind die Verengungen so an den Querschnitt der Heizungsrohre angepaßt, daß ein Heizungsrohr durch Eindrükken des Heizungsrohres in eine der Aussparungen in einer Richtung senkrecht zum Basisschenkel unter elaslischem Nachgeben des aufragenden Schenkels mindestens im Bereich einer Rastnase in die Aussparung einrastbar ist, wobei das elastische Nachgeben des Schenkels durch das Eindrücken des Heizungsrohres bewirkt wird.

Dies hat in Verbindung mit dem Merkmal, daß der aufragende Schenkel mit einem waagerecht auf einer Unterlage aufliegenden Basisschenkel einen spitzen Winkel bildet, folgenden besonderen Vorteil: Der schräg aufragende Schenkel bewirkt, daß die von dem Heizungsrohr auf diesen Schenkel beim Herunterdrücken des Heizungsrohres ausgeübte Kraft zu einem Teil in einer Richtung quer zur Fläche des Schenkels wirkt. Die Bereiche nahe den Rastnasen können daher leicht dem Heizungsrohr ausweichen, weil dieser Anteil der Kraft zunimmt, je mehr die Schenkel heruntergedrückt werden. Dieser Effekt erleichtert das Eindrücken des Heizungsrohres erheblich. Er kann auch dazu führen, daß der Schenkel auf einer Seite des Heizungsrohres stärker heruntergedrückt wird als auf der anderen Seite, so daß das Heizungsrohr beim Einrasten leicht zur Seite ausweicht.

Zugleich wird aber so eine besonders wirksame Schnappfalle für das Heizungsrohr gebildet, aus der das Heizungsrohr nicht von selbst herausspringen kann: Wirkt auf das eingerastete Heizungsrohr eine Kraft nach oben, so nimmt, je weiter der Schenkel aufgerichtet wird, umgekehrt der Anteil der Kraft zu, die parallel zur Fläche des aufragenden Schenkels wirkt. Ein Nachgeben des Schenkels in einer Richtung parallel zu seiner Fläche ist aber sehr schwer möglich. Die Rastnasen halten daher das Heizungsrohr um so stärker fest. Das Heizungsrohr kann somit nicht von selbst aus der Verrastung herausspringen, so daß das Verlegen erleichtert wird. Hingegen kann zum absichtlichen Herausnehmen des Heizungsrohres durch Herunterdrücken des aufragenden Schenkels neben dem Heizungsrohr die Verengung der Aussparung erweitert werden, so daß nun das Heizungsrohr herausgehoben werden kann.

lm folgenden werden Ausführungsbeispiele anhand der Zeichnung näher erläutert.

Es zeigen:
- Figur 1: einen Querschnitt einer Verlegeschiene mit L-Profil;
- Figur 2: die Verlegeschiene nach Figur 1 in der Draufsicht;
- Figur 3: eine Ansicht der Verlegeschiene mit Blickrichtung entsprechend den Pfeilen III- III in Figur 2; und
- Figur 4: einen Querschnitt einer Verlegeschiene mit T-Profil.

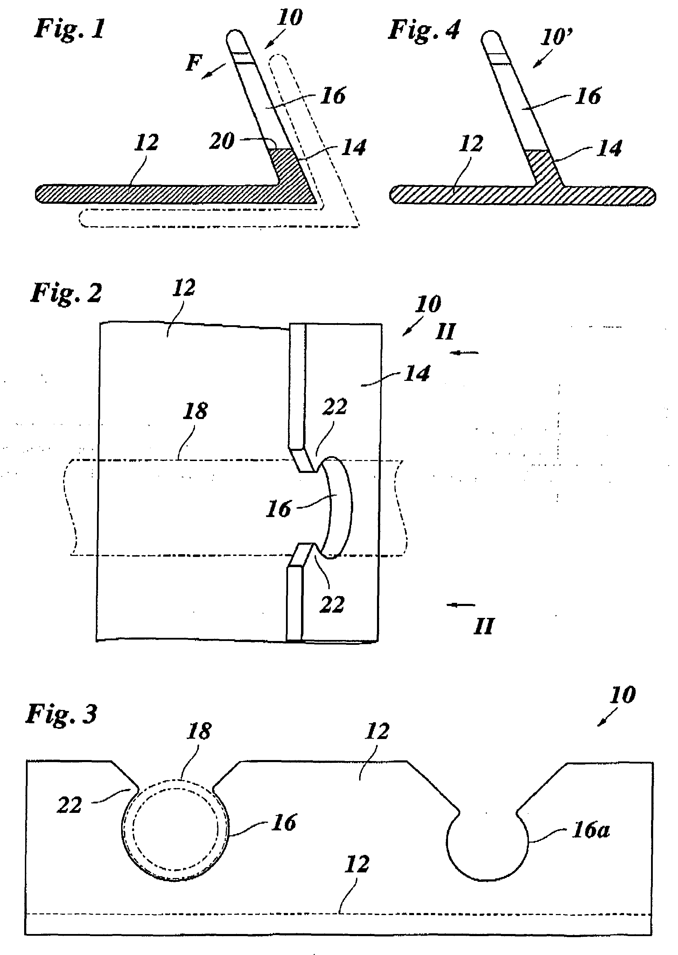

Die in Figur 1 gezeigte Verlegeschiene 10 weist einen waagerechten Basisschenkel 12 und einen aufragenden Schenkel 14 auf der mit mehreren nach oben offenen Aussparungen 16 versehen ist, von denen eine in Figur 1 geschnitten dargestellt ist. Der Schenkel 14 ist leicht zur Mitte des Basisschenkels 12 hin angewinkelt, so daß er mit dem Basisschenkel einen spitzen Winkel bildet. Die Aussparung 16 dient zur Aufnahme eines Heizungsrohres 18, wie in Figur 2 strichpunktiert angedeutet ist. In Figur 1 erkannt man, daß der Grund 20 der Aussparung 16 waagerecht verläuft, also schräg in Bezug auf den Schenkel 14, so daß er eine leicht vergrößerte Auflagefläche für das Heizungsrohr 18 bildet.

Der Querschnitt der Aussparung 16 ist in Figur 3 zu erkennen. Dieser Querschnitt ist im wesentlichen kreisförmig und bildet eine durch zwei Rastnasen 22 begrenzte Verengung, von der aus sich der Querschnitt nach oben trichterförmig zum oberen Rand des Schenkels 14 erweitert. Die Heizungsrohre 18 können deshalb leicht von oben in die Aussparung eingedrückt werden, bis sie in dem kreisförmigen Querschnittsbereich einrasten. Aufgrund der Schrägstellung des Schenkels 14 wirkt auf die Rastnasen 22 beim Einrasten des Heizungsrohres eine rechtwinklig zum Schenkel gerichtete Kraftkomponente F (Figur 1), die ein elastisches Nachgeben der Rastnasen 22 erleichtert und sich beim Nachgeben der Rastnasen 22 noch vergrö-ßert. Deshalb kann die Verengung zwischen den Rastnasen eine relativ geringe Breite aufweisen, so daß sich auch Heizungsrohre mit kleinerem Durchmesser formschlüssig in der Aussparung 16 fixieren lassen. Das Heizungsrohr läßt sich somit durch Eindrücken des Heizungsrohres in eine der Aussparungen in einer Richtung senkrecht zum Basisschenkel 12 unter elastischem Nachgeben des aufragenden Schenkels 14 in die Aussparung einrasten. Dabei wird das elastische Nachgeben des aufragenden Schenkels 14 durch das Eindrücken des Heizungsrohres bewirkt.

Da bei einer senkrecht nach oben auf das Heizungsrohr wirkenden Kraft eine Kraftkomponente rechtwinklig zum Schenkel 14 in einer der Kraftkomponente F entgegengesetzten Richtung wirkt, wird in diesem Fall der Schenkel 14 mit den Rastnasen 22 nicht heruntergedrückt, sondern vielmehr aufgerichtet, so daß die rechtwinklig wirkende Kraftkomponente sich verringert. Daher wird ein Herausspringen des Heizungsrohres verhindert. Das Heizungsrohr ist somit sicher in einer Schnappfalle gehalten.

Beim Einrasten der Heizungsrohre wird der Kraftangriffspunkt durch die Rastnasen 22 gebildet. Da dieser Kraftangriffspunkt aufgrund der Schrägstellung des Schenkels 14 oberhalb der Fläche des Basisschenkels 12 liegt, ist gewährleistet, daß die Verlegeschiene beim Einrasten des Heizungsrohres nicht umkippt.

Wie Figur 3 zeigt, liegt das Heizungsrohr 18 formschlüssig, jedoch mit geringem Spiel in der Aussparung 16. Aufgrund dieses Spiels und aufgrund der leichten Verformbarkeit der Rastnasen 22 wird vermieden, daß eine als Diffusionssperre dienende Beschichtung auf der äußeren Umfangsfläche der Heizungsrohre 18 beschädigt wird. Außerdem können sich die Heizungsrohre 18 im Fall von Wärmedehnung axial in der Aussparung 16 verschieben, ohne daß der Schenkel 14 verformt wird und ohne daß die Diffusionssperre durchgescheuert wird.

Die Aussparungen 16 sind in einem vorbestimmten Raster, entsprechend dem Verlegungsmuster der Heizungsrohre 18, in dem Schenkel 14 der Verlegeschiene angeordnet. Dazwischen sind jeweils Aussparungen 16a vorgesehen, die an Heizungsrohre mit einem kleineren Querschnitt angepaßt sind, so daß sich durch Benutzung entweder der Aussparungen 16 oder der Aussparungen 16a ein und dieselbe Verlegeschiene 10 für Heizungsrohre mit in einem weiten Bereich variierenden Durchmessern verwenden läßt.

Die L-Form der Verlegeschiene 10 ermöglicht es, bei der Lagerung und beim Transport mehrere Verlegeschienen platzsparend ineinander zu schachteln wie in Figur 1, strichpunktiert angedeutet ist.

Wenn nach dem Verlegen der Heizungsrohre 18 diese Heizungsrohre und die Verlegeschienen 10 in eine Schicht aus Estrich eingebettet werden, so wird das obere Ende des aufragenden Schenkels 14 durch Estrich überdeckt, so daß man eine zusammenhängende Estrichschicht erhält, die bei jeder Verlegeschiene 10 durch den einzigen aufragenden Schenkel 14 teilweise unterbrochen wird. Der Estrich auf jeder Seite des Schenkels 14 ist dabei Teil eines relativ großflächigen Estrichkörpers so daß sich Spannungen in dem Estrich, die sich durch mechanische Belastung oder Wärmeausdehnung ergeben können, in dem Estrichkörper verteilen können. Auf diese Weise wird die Gefahr einer Rißbildung im Bereich der Verlegeschiene 10 erheblich reduziert. Durch die Schrägstellung des Schenkels 14 wird außerdem auch in vertikaler Richtung eine formschlüssige Verzahnung zwischen dem Estrich und der Verlegeschiene erreicht. Dies trägt zur weiteren Reduzierung der Rißbildung bei.

Figur 4 zeigt als alternative Ausführungsform eine Verlegeschiene 10 mit einem T-Profil. Auch hier ist nur ein einziger, schräg aufragender Schenkel 14 vorhanden, so daß sich hinsichtlich der Rißbildung und der Verrastung der Heizungsrohre ähnliche Vorteile ergeben wie bei der Ausführungsform nach Figuren 1 bis 3. Die Verlegeschienen 10, 10' können einfach als Strangprofile aus Kunststoff hergestellt werden bei denen nachträglich die Aussparungen 16, 16a ausgefräst oder ausgekniffen werden.

## Patentansprüche

1. Verlegeschiene für Fußbodenheizungsrohre, mit an den Querschnitt der Heizungsrohre (18) angepaßten Aussparungen (16), wobei die die Verlegeschiene (10; 10') ein L- oder T-Profil aufweist, **dadurch gekennzeichnet, daß** ein aufragender Schenkel (14) der Verlegeschiene mit einem waagerecht auf einer Unterlage aufliegenden Basisschenkel (12) einen spitzen Winkel bildet.

2. Verlegeschiene nach Anspruch 1, **dadurch gekennzeichnet, daß** die Aussparungen (16) über eine durch Rastnasen (22) begrenzte Verengung zum oberen Rand des aufragenden Schenkels (14) der Verlegeschiene hin offen sind.

3. Verlegeschiene nach Anspruch 2, **dadurch gekennzeichnet, daß** die Aussparungen (16) so an den Querschnitt der Heizungsrohre (18) angepaßt sind, daß die Heizungsrohre mit Spiel in den Aussparungen liegen.

4. Verlegeschiene nach einem der vorstehenden Ansprüche, **dadurch gekennzeichnet, daß** sie mehrere Sätze von Aussparungen (16, 16a) aufweist, die jeweils an unterschiedliche Querschnitte der Heizungsrohre (18) angepaßt sind.

5. Verlegeschiene nach einem der vorstehenden Ansprüche, **dadurch gekennzeichnet, daß** ein Heizungsrohr (18) durch Eindrücken von oben in eine der Aussparungen (16) unter elastischem Nachgeben der Rastnasen (22) in die Aussparung (16) einrastbar ist.

6. Verlegeschiene nach einem der vorstehenden Ansprüche, **dadurch gekennzeichnet, daß** die Verengungen so an den Querschnitt der Heizungsrohre (18) angepaßt sind, daß ein Heizungsrohr (18) durch Eindrücken des Heizungsrohres (18) in eine der Aussparungen (16) in einer Richtung senkrecht zum Basisschenkel (12) unter elastischem Nachgeben des aufragenden Schenkels (14) mindestens im Bereich einer Rastnase (22) in die Aussparung (16) einrastbar ist, wobei das elastische Nachgeben des Schenkels (14) durch das Eindrücken des Heizungsrohres (18) bewirkt wird.
